# EUROPEAN PATENT SPECIFICATION

(11) **EP 2 370 477 B1**
(45) Date of publication and mention of the grant of the patent: **21.11.2012**
(21) Application number: 09793547.2
(22) Date of filing: 21.12.2009
(51) Int. Cl.: C08F 4/651, C08F 4/655, C08F 110/02

(54) **CATALYST COMPONENTS FOR THE POLYMERIZATION OF OLEFINS AND CATALYSTS THEREFROM OBTAINED**
KATALYSATORKOMPONENTEN FÜR DIE POLYMERISATION VON OLEFINEN UND DARAUS ERHALTENE KATALYSATOREN
COMPOSANTS DE CATALYSEUR DESTINÉS À LA POLYMÉRISATION D'OLÉFINES ET CATALYSEURS OBTENUS À PARTIR DE CES COMPOSANTS

(30) Priority: 29.12.2008 EP 08172960; 09.01.2009 US 204696 P
(43) Date of publication of application: 05.10.2011
(73) Proprietor: Basell Poliolefine Italia S.r.l., 20127 Milano (IT)
(72) Inventor: GUNDERT, Friedhelm, 65835 Liederbach (DE); SCHNEIDER, Martin, 65239 Hochheim (DE)
(74) Representative: Giberti, Stefano
(86) International application number: PCT/EP2009/067624
(87) International publication number: WO 2010/076255

(56) References cited:
- EP-A1- 0 553 806
- EP-A1- 0 855 409
- EP-A1- 1 260 524
- WO-A1-00/08074
- WO-A1-2004/085495

## Description

The present invention relates to catalyst components for the polymerization of olefins CH₂=CHR, wherein R is hydrogen or hydrocarbon radical having 1-12 carbon atoms. In particular, the invention relates to catalyst components suitable for the preparation of homopolymers and copolymers of ethylene and to the catalysts obtained therefrom.

In particular, the present invention relates to solid catalyst components, comprising titanium magnesium and halogen, and obtainable by a reaction with specific electron donors compounds.

The catalysts of the invention are suitably used in (co)polymerization processes of ethylene to prepare (co)polymers having narrow Molecular Weight Distribution (MWD) and high activity. The MWD is an important characteristic of ethylene polymers in that it affects both the rheological behaviour, and therefore the processability, and the final mechanical properties. In particular, polymers with narrow MWD are suitable for cast films and injection moulding in that deformation and shrinkage problems in the manufactured article are minimized. The width of the molecular weight distribution for the ethylene polymers is generally expressed as melt flow ratio F/E, which is the ratio between the melt index measured by a load of 21.6 Kg (melt index F) and that measured with a load of 2.16 Kg (melt index E). The measurements of melt index are carried out according to ASTM D-1238 and at 190°C.

Catalyst components having the capability of giving polymers with narrow molecular weight distribution are also useful to prepare polymer compositions with broad molecular weight distribution. In fact, one of the most common methods for preparing broad MWD polymers is the multi-step process based on the production of different molecular weight polymer fractions in each step, sequentially forming macromolecules with different length on the catalyst particles.

The control of the molecular weight obtained in each step can be carried out according to different methods, for example by varying the polymerization conditions or the catalyst system in each step, or by using a molecular weight regulator. Regulation with hydrogen is the preferred method either working in suspension or in gas phase. This latter kind of process is nowadays highly preferred due to both the high quality of the polymer obtained and the low operative costs involved with it.

It has been observed that final compositions of optimal properties are obtainable when a catalyst is used able to provide polymers with narrow MWD and different average Mw in each single step that, when combined together form final compositions with broad molecular weight distribution. In these multistep processes a critical step is that in which the lower average molecular weight polymer fraction is prepared. In fact, one of important features that the catalyst should possess is the so called "hydrogen response", that is the extent of capability to reduce the molecular weight of polymer produced in respect of increasing hydrogen concentration. Higher hydrogen response means that a lower amount of hydrogen is required to produce a polymer with a certain molecular weight. In turn, a catalyst with good hydrogen response would also usually display a higher activity in ethylene polymerization due to the fact that hydrogen has a depressive effect on the catalyst activity.

In addition, due to the polymerization conditions and characteristics of the polymer produced in this step (intrinsically higher fragility), the catalyst/polymer system is often fragmented in very small particles that reduce the polymer bulk density and create high amount of fines making difficult the operation of the plant particularly in the gas-phase polymerization.

In view of the above, it would be therefore useful to have a catalyst component able to provide ethylene polymers with narrow molecular weight distribution, combined with a good balance of polymerization activity and morphological stability.

Various attempts have been made to prepare catalysts able to withstand to such demanding polymerization conditions. In WO2008/074674 it has been described that a catalyst having good morphological stability and ability to withstand to drastic polymerization conditions could be obtained for example by subjecting an already preformed porous catalyst to thermal treatment and/or a contact stage with an aluminum alkyl compound. Although the results are good in terms of morphological stability, it has to be noted that this treatment, in addition to lowering the polymerization activity also makes the catalyst preparation process more complex.

A catalyst component for preparing ethylene (co)polymers having narrow MWD is described in the European patent application EP-A-553806. The catalyst, comprising Ti, Mg, halogen, OR^{I} groups is characterized by a ratio OR/Ti of at least 0.5, by a porosity (determined with mercury porosimeter) of from 0.35 to 0.7 which furthermore has a specific pore distribution. Said catalyst is obtained by a rather long process which comprises the preparation of a MgCl₂-alcohol adduct having about 3 moles of alcohol which is first thermally dealcoholated up to an intermediate alcohol content and then chemically dealcoholated up to an almost complete extent. The so created porous precursor is then reacted with a titanium alkoxy compound in the presence of a halogenating agent and, optionally, of a reducing agent. The catalyst so obtained is able to produce ethylene (co)polymers with a narrow MWD but the morphological properties of the catalyst are not optimal. In EP 553805 catalyst component are disclosed as being prepared by a process which comprises the preparation of a MgCl₂-alcohol adduct having about 3 moles of alcohol which is thermally dealcoholated up to an intermediate alcohol content and then reacted with a titanium tetrachloride in molar ratio with the partially dealcoholated Mg containing precursor ranging from 0.3 to 3. The catalyst so prepared has high activity but the MWD is not sufficiently narrow.

It has therefore surprisingly been found that a different preparation method is suited to prepare catalyst component endowed with the above mentioned characteristics. It is therefore an object of the present invention a catalyst component for the polymerization of olefins comprising Mg, Ti and Cl obtained by a process comprising the following steps:
(a) reacting a precursor of formula MgCl₂.mEtOH, wherein m ≤ 1.5 having a porosity due to pores with radius up to 1 µm of higher than 0.4 cm³/g with an alcohol of formula R^{I}OH where R^{I} is an alkyl different from ethyl, a cycloalkyl or aryl radical having 3-20 carbon atoms said R^{I}OH being reacted with the said precursor using molar ratio R^{I}OH/Mg ranging from 0.01 to 10; and
(b) reacting the product obtained in (a) with TiCl₄ using Ti/Mg molar ratio ranging from 0.01 to 15.

Preferably, in step (a) the molar ratio R^{I}OH/Mg ranges from 0.05 to 4, and more preferably from 0.1 to 2 and especially ranging from 0.1-1.5. Preferably the reaction is carried out in a hydrocarbon liquid medium suitably selected from liquid saturated hydrocarbons. Preferably R^{I} is selected from C3-C12 secondary alkyls and more particularly among C3-C8 cycloalkyl, cyclohexyl being the most preferred. The formula R^{I}OH also includes polyhydroxy compounds such as glycols and other bi and multifunctional alcohols like butanediol, and pentanediol

The precursor of formula MgCl₂.mEtOH has preferably porosity due to pores with radius up to 1 µm of higher than 0.5 cm³/g and more preferably ranging from 0.6 to 1.4 cm³/g. Moreover, in the said precursor, m is preferably lower than 1, more preferably lower than 0.5 and especially ranging from 0.01 to 0.3.

The MgCl₂.mEtOH precursor can be obtained by subjecting MgCl₂.mEtOH in which m ranges from higher than 1.5 to 4.5 to a thermal and/or chemical dealcoholation process. The thermal dealcoholation process is carried out in nitrogen flow at temperatures comprised between 50 and 150°C until the alcohol content is reduced to the desired value. The chemical dealcoholation is carried out with reagents capable of reacting with the OH groups of the alcohol and being thereafter washed away from the solid reaction product. Usually, after the chemical dealcoholation final amount of EtOH is reduced to values which are generally lower than 0.5 mols. The adducts can also be dealcoholated to a very great extent, by reducing the alcohol content down to values lower than 0.05 mols. The chemical treatment can be carried out after the thermal treatment or instead of it. The treatment with the dealcoholating chemical agents is carried out by using an amount of such an agent which is large enough to react with the OH groups present in the alcohol contained in the adduct. Preferably, the treatment is carried out using a slight excess of said agent, which is then removed prior to the reaction identified as step a). It is preferred to carry out the chemical dealcoholation of the MgCl₂.EtOH adduct using Al-alkyl compound such as Al-triethyl, Aluminum triisobutyl, aluminium triisoprenyl or halogenated aluminium alkyl compound such as ethylaluminum dichloride or diethylaluminum chloride.

The MgCl₂.mEtOH compounds in which m ranges from higher than 1.5 to 4.5 can generally be obtained by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in USP 4,469,648, USP 4,399,054, and WO98/44009. Another useable method for the spherulization is the spray cooling described for example in USP 5,100,849 and 4,829,034. Adducts having the desired final alcohol content can be obtained by directly using the selected amount of alcohol directly during the adduct preparation. However, if adducts with increased porosity are to be obtained it is convenient to first prepare adducts with more than 1.7 moles of alcohol per mole of MgCl₂ and then removing totally or partially the alcohol via thermal or chemical dealcoholation. A process of this type is described in EP 395083.

In step (b), which is also preferably carried out in a liquid hydrocarbon medium, the TiCl₄ is preferably used in amounts such as to have a Ti/Mg molar ratio ranging from 0.1 to 10 and more preferably from 0.15 to 5 and especially ranging from 0.2 to 4. The reaction is carried out at a temperature ranging from 50 to 140°C, preferably from 60 to 120°C and more preferably from 65 to 110°C for a period of time ranging from 10 minutes to 10 hours, preferably from 30 minutes to 5 hours.

The catalyst component recovered from step (b) once washed and dried can be used as such or it can be subject to a pre-activation treatment with hydrocarbylaluminum having from 1 to 6 carbon atoms in the hydrocarbyl radical, e.g. triethylaluminum, triisobutylaluminum, triisohexylaluminum, aluminium triisoprenyl. Preference is given to triethylaluminum, triisobutylaluminum and triisoprenylaluminum. Also alkylaluminum halides and in particular alkylaluminum chlorides such as diethylaluminum chloride (DEAC), diisobutylaluminum chloride, Al-sesquichloride and dimethylaluminum chloride (DMAC) can be used.

The mixing of the two reactants can be carried out in a stirred vessel at a temperature of from -30°C to 150°C prior to the polymerization.

The catalyst components of the invention whatever is the method for their preparation, form catalysts, for the polymerization of olefins CH₂=CHR^{III} wherein R^{III} is hydrogen or a hydrocarbon radical having 1-12 carbon atoms by reaction with organo-A1 compounds. In particular Al-trialkyl compounds, for example Al-trimethyl, Al-triethyl, Al-tri-n-butyl , Al-triisobutyl are preferred. The Al/Ti ratio is higher than 1 and is generally comprised between 5 and 800.

Also alkylaluminum halides and in particular alkylaluminum chlorides such as diethylaluminum chloride (DEAC), diisobutylaluminum chloride, Al-sesquichloride and dimethylaluminum chloride (DMAC) can be used. It is also possible to use, and in certain cases preferred, mixtures of trialkylaluminum's with alkylaluminum halides. Among them mixtures TEAL/DEAC and TIBA/DEAC are particularly preferred.

The above solid catalyst component and aluminum alkyl can be fed separately into the reactor where, under the polymerization conditions can exploit their activity. As mentioned above, it constitutes however a particular advantageous embodiment they can be pre-contacted components, optionally in the presence of small amounts of olefins, for a period of time ranging from 0.1 to 120 minutes preferably in the range from 1 to 60 minutes.

In addition it could be also possible to introduce the Al-alkyl compound(s) into the polymerization reactors in two or more aliquots. As an example, a first aliquot can be used to form the catalysts system in the pre-contact section together with the solid catalyst component and then introduced into the reactor for the polymerization step I and a second aliquot can be added to the system in the further step II.

The components of the invention and catalysts obtained therefrom find applications in the processes for the preparation of several types of olefin polymers.

As mentioned above, the catalysts of the invention are endowed with a particularly high morphological stability, high activity and capability to give ethylene polymers with narrow molecular weight distribution. Due to this features, they are particularly suitable for use in cascade, or sequential polymerization processes, for the preparation of broad molecular weight ethylene polymers both in slurry and gas-phase. In general the catalyst can be used to prepare: high density ethylene polymers (HDPE, having a density higher than 0.940 g/cm³), comprising ethylene homopolymers and copolymers of ethylene with alpha-olefins having 3-12 carbon atoms; linear low density polyethylene's (LLDPE, having a density lower than 0.940 g/cm³) and very low density and ultra low density (VLDPE and ULDPE, having a density lower than 0.920 g/cm³, to 0.880 g/cm³) consisting of copolymers of ethylene with one or more alpha-olefins having from 3 to 12 carbon atoms, having a mole content of units derived from the ethylene higher than 80%. One additional advantage of the catalyst described in the present application is that it can be used as such in the polymerization process by introducing it directly into the reactor without the need of pre-polymerizing it. This allows simplification of the plant set-up and simpler catalyst preparation process.

The following examples are given in order to further describe the present invention.

The properties are determined according to the following methods:

Porosity and surface area with nitrogen: are determined according to the B.E.T. method (apparatus used SORPTOMATIC 1900 by Carlo Erba).

### Porosity and surface area with mercury:

The measure is carried out using a "Porosimeter 2000 series" by Carlo Erba.

The porosity is determined by absorption of mercury under pressure. For this determination use is made of a calibrated dilatometer (diameter 3 mm) CD₃ (Carlo Erba) connected to a reservoir of mercury and to a high-vacuum pump (1.10⁻² mbar). A weighed amount of sample is placed in the dilatometer. The apparatus is then placed under high vacuum (<0.1 mm Hg) and is maintained in these conditions for 20 minutes. The dilatometer is then connected to the mercury reservoir and the mercury is allowed to flow slowly into it until it reaches the level marked on the dilatometer at a height of 10 cm. The valve that connects the dilatometer to the vacuum pump is closed and then the mercury pressure is gradually increased with nitrogen up to 140 kg/cm². Under the effect of the pressure, the mercury enters the pores and the level goes down according to the porosity of the material.

The porosity (cm³/g), both total and that due to pores up to 1 µm, the pore distribution curve, and the average pore size are directly calculated from the integral pore distribution curve which is function of the volume reduction of the mercury and applied pressure values (all these data are provided and elaborated by the porosimeter associated computer which is equipped with a "MILESTONE 200/2.04" program by C. Erba.

| | |
|---|---|
| Ti: | photometrically via the peroxide complex |
| Mg, Cl: | titrimetrically by customary methods |

The product properties of the polymer powders reported in the tables were determined by the following methods:

| | |
|---|---|
| MFR_{2.16/190}: | mass flow rate (melt index) in accordance with EN ISO1133, nominal load = 2,16 kg and test temperature = 190°C |
| FRR_{21.6/2.16}: | Flow rate ratio in accordance with EN ISO1133: FRR_{21.6/2.16} = (MFR_{21.6/190}/ MFR_{2.16/190}) |
| Bulk density: | in accordance with DIN EN ISO 60 |
| d₅₀ (mean particle diameter): | in accordance with DIN 53477 and DIN66144 |
| s-value (=ln(d₅₀/d₁₆)) : | in accordance with DIN 53477 and DIN66144 |

### EXAMPLES

### Example 1

A magnesium chloride and alcohol adduct containing about 3 mols of alcohol was prepared following the method described in example 2 of USP 4,399,054, but working at 2000 RPM instead of 10000 RPM.

The so obtained adduct was dealcoholated via a thermal treatment, under nitrogen stream, over a temperature range of 50-150 °C obtaining a precursor having the following composition: 18.9wt-%Mg, 24.2 wt-% EtOH and 1.9wt-% H₂O. Mean particle average is 58µm.

### a) Chemical dealcoholisation of MgCl₂*EtOH support with triethylaluminium

In a 1 dm³ four-neck flask provided with reflux condenser, stirrer and inert gas blanketing (Ar), 27.0 g of the above precursor corresponding to 0.21 mol of Mg were suspended in 0.27 dm³ of diesel oil having a boiling range from 140 to 170°C (hydrogenated petroleum fraction). After cooling down to -10°C, 0.17 mol of triethylaluminium (TEA) diluted up to 0.4 dm³ with diesel oil was added dropwise while stirring over a period of 1 hour. Within a time period of 2 hours, the suspension was slowly heated to 85°C. After an after-reaction time of 1 hour, the suspension was cooled down to 70°C. After the solid had settled, the supernatant liquid phase (mother liquor) was taken off. The solid was subsequently resuspended in fresh diesel oil (hydrogenated petroleum fraction having a boiling range from 140 to 170°C) and after a stirring time of 15 minutes and subsequent complete settling of the solid, the supernatant liquid phase was taken off again. This washing procedure was repeated a second time. Then the suspension was cooled down to ambient temperature and the washing procedure was performed another three times as described above. The final volume of the suspension of the thus dealcoholised support was 0.4 dm³.

### b) Preparation of catalyst component

The suspension described in a) was heated to 85°C. Then 0.063 mol of cyclohexanol diluted up to 0.1 dm³ with diesel oil was added dropwise over a period of 1 hour. After an after-reaction time of 1 hour, 0.21 mol TiCl₄ diluted up to 0.05 dm³ with diesel oil was added dropwise over a period of 0.5 hour. After an after-reaction time of 2 hours the suspension was cooled down to 60°C. Then the stirrer was switched off and after the solid had settled, the supernatant liquid phase (mother liquor) was taken off. The solid was subsequently resuspended in fresh diesel oil (hydrogenated petroleum fraction having a boiling range from 140 to 170°C) and after a stirring time of 15 minutes and subsequent complete settling of the solid, the supernatant liquid phase was taken off again. This washing procedure was repeated until the titanium concentration of the mother liquor was lower than 10 mmol/dm³.

The suspension was cooled to room temperature. The titanium content of the solid catalyst component was 6.8 wt-% (=0.71 kg catalyst per mol titanium). The molar ratio was:
Mg:Ti:Cl ≈ 1:0.17:2.21.

### c) Ethylene polymerization in suspension:

800 cm³ of diesel oil (hydrogenated petroleum fraction having a boiling range from 140 to 170°C) were placed in a 1.5 dm³ reactor. The reactor was then heated to 75°C and, under a blanket of nitrogen, 2 mmol of triethylaluminum as cocatalyst and subsequently the catalyst component prepared as described in example 1b in an amount corresponding to 0.015 mmol of titanium, as a suspension diluted with diesel oil, were introduced into the reactor. The reactor was then pressurized with 3.0 bar of hydrogen and 7.0 bar of ethylene. The total pressure of 10 bar was kept constant during the polymerization time of 2 hours by replacing the ethylene which had been consumed. The polymerization was stopped by shutting off the ethylene feed and venting of the gases. The polymer powder was separated off from the dispersion medium by filtration and drying.

The results of the polymerization are shown in Table 1.

### Example 2

The catalyst was prepared according to the same procedure described in example I except that 0.031 mol of cyclohexanol was used.

The titanium content of the solid catalyst component was 3.7 wt-% (1.30 kg catalyst per mol titanium). The molar ratio was: Mg:Ti:Cl ≈ 1:0.08:2.11.

The polymerization is carried out as described in Example 1 except that the catalyst component was introduced into the reactor in an amount corresponding to 0.0075 mmol of titanium as a suspension diluted with diesel oil. The results of the polymerization are listed in Table 1.

### Example 3

The catalyst was prepared according to the same procedure as described in example 1 except that 0.052 mol of cyclohexanol was used.

The titanium content of the solid catalyst component was 5.2 wt-% (0.92 kg catalyst per mol titanium). The molar ratio was: Mg:Ti:Cl ≈ 1:0.13:2.22.

The polymerization is carried out as described in Example 1. The results of the polymerization are listed in Table 1.

### Example 4

The catalyst was prepared according to the same procedure as described in example 1 except that 0.042 mol of cyclohexanol was used and except that 0.525 mol of TiCl₄ diluted up to 0.1 dm³ with diesel oil was added.

The titanium content of the solid catalyst component was 4.3 wt-% (1.12 kg catalyst per mol titanium). The molar ratio was: Mg:Ti:Cl ≈ 1:0.11:2.23.

The polymerization is carried out as described in Example 1 except that the catalyst component was introduced into the reactor in an amount corresponding to 0.0075 mmol of titanium as a suspension diluted with diesel oil. The results of the polymerization are listed in Table 1.

### Example 5

The catalyst was prepared according to the same procedure as described in example 1 except that before the addition of cyclohexanol, the suspension was annealed at 120°C for 20 hours and except that 0.042 mol of cyclohexanol was used and except that 0.525 mol of TiCl₄ diluted up to 0.1 dm³ with diesel oil was added.

The titanium content of the solid catalyst component was 5.0 wt-% (0.96 kg catalyst per mol titanium). The molar ratio was: Mg:Ti:Cl ≈ 1:0.12:2.16.

The polymerization is carried out as described in Example 1 except that the catalyst component was introduced into the reactor in an amount corresponding to 0.0075 mmol of titanium as a suspension diluted with diesel oil. The results of the polymerization are listed in Table 1.

### Example 6

The catalyst was prepared according to the same procedure as described in example 1 except that Isoprenylaluminium (IPRA) was used instead of TEA for the dealcoholisation and except that 0.126 mol of cyclohexanol was used.

The titanium content of the solid catalyst component was 9.8 wt-% (0.49 kg catalyst per mol titanium). The molar ratio was: Mg:Ti:Cl ≈ 1:0.29:2.40.

The polymerization is carried out as described in Example 1 except that the catalyst component was introduced into the reactor in an amount corresponding to 0.045 mmol of titanium as a suspension diluted with diesel oil. The results of the polymerization are listed in Table 1.

### Example 7

### a) Chemical dealcoholisation of MgCl₂*EtOH support with triethylaluminium

In a 2 dm³ four-neck flask provided with reflux condenser, stirrer and inert gas blanketing (Ar), 103 g of MgCl₂*EtOH support as described in example 1 corresponding to 0.80 mol of Mg were suspended in 1.0 dm³ of diesel oil having a boiling range from 140 to 170°C (hydrogenated petroleum fraction). After cooling down to -10°C, 0.32 mol of triethylaluminium (TEA) diluted up to 0.5 dm³ with diesel oil was added dropwise while stirring over a period of 1 hour. Within an after-reaction time of 0.5 hour, the suspension was heated to 20°C. After the solid had settled, the supernatant liquid phase (mother liquor) was taken off. The solid was subsequently resuspended in fresh diesel oil (hydrogenated petroleum fraction having a boiling range from 140 to 170°C) and after a stirring time of 15 minutes and subsequent complete settling of the solid, the supernatant liquid phase was taken off again. This washing procedure was repeated three times. Then the suspension was cooled down again to -10°C and addition of TEA and subsequent after-reaction and washing procedure was repeated twice. Afterwards the suspension was washed another two times as described above.

### b) Preparation of catalyst component

The suspension described in a) was heated to 85°C. Then 0.16 mol of cyclohexanol diluted up to 0.1 dm³ with diesel oil was added dropwise over a period of 1 hour. After an after-reaction time of 1 hour, 0.80 mol TiCl₄ diluted up to 0.2 dm³ with diesel oil was added dropwise over a period of 0.5 hour. After an after-reaction time of 2 hours the suspension was cooled down to 60°C. Then the stirrer was switched off and after the solid had settled, the supernatant liquid phase (mother liquor) was taken off. The solid was subsequently resuspended in fresh diesel oil (hydrogenated petroleum fraction having a boiling range from 140 to 170°C) and after a stirring time of 15 minutes and subsequent complete settling of the solid, the supernatant liquid phase was taken off again. This washing procedure was repeated until the titanium concentration of the mother liquor was lower than 10 mmol/dm³.

The suspension was cooled to room temperature. The titanium content of the solid catalyst component was 3.6 wt-% (1.33 kg catalyst per mol titanium). The molar ratio was:
Mg:Ti:Cl ≈ 1:0.10:2.24.

### c) Pre-activation of catalyst component

Catalyst component as described under b) was pre-activated with triethylaluminium. For this purpose TEA was added to the suspension corresponding to a molar ratio of TEA/Ti=0.85:1. The preactivation was performed at 60°C within a time period of 2 hours. Then, it was washed with hexane and dried in a filtration unit under inert gas blanketing (Ar).

### d) Ethylene polymerization in suspension:

The polymerization is carried out as described in Example 1 except that the catalyst component was introduced into the reactor in an amount corresponding to 0.0075 mmol of titanium as a suspension diluted with diesel oil. The results of the polymerization are listed in Table 1.

### Example 8

The catalyst was prepared according to the same procedure described in example 7 except that TiCl₄ was added at T=100°C followed by an after reaction-time of two hours at 100°C.

The titanium content of the solid catalyst component was 4.1 wt-% (1.18 kg catalyst per mol titanium). The molar ratio was: Mg:Ti:Cl ≈ 1:0.10:2.16.

The polymerization is carried out as described in Example 1 except that the catalyst component was introduced into the reactor in an amount corresponding to 0.0075 mmol of titanium as a suspension diluted with diesel oil. The results of the polymerization are listed in Table 1.

### Example 9

The catalyst was prepared according to the same procedure described in example 7 except that the catalyst component was pre-activated with Isoprenylaluminium(IPRA) instead of TEA. IPRA was added to the suspension corresponding to a molar of AlTi=0.5:1. The preactivation was performed at 50°C within a time period of 2 hours.

The titanium content of the solid catalyst component was 4.1 wt-% (1.16 kg catalyst per mol titanium). The molar ratio was: Mg:Ti:Cl ≈ 1:0.11:2.36.

The polymerization is carried out as described in Example 1 except that the catalyst component was introduced into the reactor in an amount corresponding to 0.0075 mmol of titanium as a suspension diluted with diesel oil. The results of the polymerization are listed in Table 1.

### Example 10

The catalyst was prepared according to the same procedure described in example 7 except that butanediol-1,4 was used instead of cyclohexanol.

The titanium content of the solid catalyst component was 1.9 wt-% (2.56 kg catalyst per mol titanium). The molar ratio was: Mg:Ti:Cl ≈ 1:0.05:2.20.

The polymerization is carried out as described in Example 1 except that the catalyst component was introduced into the reactor in an amount corresponding to 0.0075 mmol of titanium as a suspension diluted with diesel oil. The results of the polymerization are listed in Table 1.

### Example 11

The catalyst was prepared according to the same procedure described in example 7 except that a different MgCl₂*EtOH-support was used, which had the following initial composition: 18.5wt-%Mg, 24.4 wt-% EtOH and 3.1wt% H₂O Mean particle average is 58µm. This support was prepared by a thermal treatment, under nitrogen stream, over a temperature range of 50-150 °C of a magnesium chloride and alcohol adduct containing about 3 mols of alcohol which in turn was prepared following the method described in example 2 of USP 4,399,054, but working at 2000 RPM instead of 10000 RPM.

The titanium content of the solid catalyst component was 3.7 wt-% (1.29 kg catalyst per mol titanium). The molar ratio was: Mg:Ti:Cl ≈ 1:0.10:2.26.

The polymerization is carried out as described in Example 1 except that the catalyst component was introduced into the reactor in an amount corresponding to 0.0075 mmol of titanium as a suspension diluted with diesel oil. The results of the polymerization are listed in Table 1.

### Example 12

The MgCl₂*EtOH-support used had the following initial composition: 18.7 wt-%Mg, 23.5 wt-% EtOH and 3.4 wt-% H₂O. Mean particle average is 43µm. This support was prepared by a thermal treatment, under nitrogen stream, over a temperature range of 50-150 °C of a magnesium chloride and alcohol adduct containing about 3 mols of alcohol which in turn was prepared following the method described in example 2 of USP 4,399,054, but working at 3500 RPM instead of 10000 RPM. In a glass-loop this support has been thermally treated under a continuous stream of nitrogen up to T=130°C. The treatment was finished when EtOH-content was reduced to 2.7 wt-% and H₂O-content was reduced to 4.6 wt-%. Mg-content increased to 23.6 wt-%. Mean particle average remained at d₅₀=43µm.

In a 1 dm³ four-neck flask provided with reflux condenser, stirrer and inert gas blanketing (Ar), 27 g of the such physically dealcoholised support corresponding to 0.26 mol of Mg was suspended in 0.3 dm³ of diesel oil having a boiling range from 140 to 170°C (hydrogenated petroleum fraction). After the suspension was heated to 85°C, 0.04 mol of Cyclohexanol diluted up to 0.1 dm³ with diesel oil was added dropwise over a period of 1 hour. After an after-reaction time of 1 hour, 0.13 mol TiCl₄ diluted up to 0.05 dm³ with diesel oil was added dropwise over a period of 0.5 hour. After an after-reaction time of 2 hours the suspension was cooled down to 60°C. Then the stirrer was switched off and after the solid had settled, the supernatant liquid phase (mother liquor) was taken off. The solid was subsequently resuspended in fresh diesel oil (hydrogenated petroleum fraction having a boiling range from 140 to 170°C) and after a stirring time of 15 minutes and subsequent complete settling of the solid, the supernatant liquid phase was taken off again. This washing procedure was repeated until the titanium concentration of the mother liquor was lower than 10 mmol/dm³.

The suspension was cooled to room temperature. The titanium content of the solid catalyst component was 4.4 wt-% (1.09 kg catalyst per mol titanium). The molar ratio was:
Mg:Ti:Cl ≈ 1:0. 11:2.03.

The polymerization is carried out as described in Example 1 except that the catalyst component was introduced into the reactor in an amount corresponding to 0.01 mmol of titanium as a suspension diluted with diesel oil. The results of the polymerization are listed in Table 1.

### Example 13

The catalyst was prepared according to the same procedure as described in example 13 except that 0.039 mol of cyclohexanol was used and except that 0.077 mol of TiCl4 was added.

The titanium content of the solid catalyst component was 3.5 wt-% (1.39 kg catalyst per mol titanium). The molar ratio was: Mg:Ti:Cl ≈ 1:0.10:2.10.

The polymerization is carried out as described in Example 1. The results of the polymerization are listed in Table 1.

### Example 14

The catalyst was prepared according to the same procedure as described in example 13 except that 15.0 g of dealcoholised support corresponding to 0.14 mol of Mg was suspended and except that 0.014 mol of cyclohexanol was used and except that 0.043 mol of TiCl₄ was added.

The titanium content of the solid catalyst component was 3.0 wt-% (1.60 kg catalyst per mol titanium). The molar ratio was: Mg:Ti:Cl ≈ 1:0.07:2.06.

The polymerization is carried out as described in Example 1 except that the catalyst component was introduced into the reactor in an amount corresponding to 0.01 mmol of titanium as a suspension diluted with diesel oil. The results of the polymerization are listed in Table 1.

**Table 1: Polymerization experiments in 1.5 dm³ reactor, 2 mmol of triethylaluminum, 0.8 dm³ of diesel oil, polymerization temperature: 75°C, 3.0 bar of H₂, 7.0 bar of C₂ (total pressure: 10 bar), polymerization time: 2 h**

| Ex. | Mileage | MFR _{2.16} | FRR_{21.6/2.16} | BD | d50 | s-value |
|---|---|---|---|---|---|---|
| | kg/ gcat | g/10 min | | g/dm³ | µm | |
| 1 | 9.7 | 0.64 | 22.0 | 295 | 1325 | 0.296 |
| 2 | 12.0 | 0.48 | 32.5 | 289 | 1406 | 0.272 |
| 3 | 13.1 | 0.67 | 31.0 | 298 | 1350 | 0.291 |
| 4 | 12.5 | 0.47 | 28.3 | 293 | 1426 | 0.255 |
| 5 | 10.2 | 0.39 | 27.7 | 295 | 1336 | 0.293 |
| 6 | 4.9 | 0.60 | 30.6 | 326 | 1135 | 0.333 |
| 7 | 9.8 | 0.65 | 33.1 | 342 | 1427 | 0.238 |
| 8 | 10.6 | 0.66 | 25.0 | 316 | 1263 | 0.301 |
| 9 | 12.4 | 0.62 | 32.4 | 301 | 1397 | 0.211 |
| 10 | 8.6 | 0.34 | 31.9 | 278 | 923 | 0.404 |
| 11 | 9.0 | 0.48 | 31.3 | 321 | 1441 | 0.211 |
| 12 | 9.1 | 0.34 | 30.9 | 401 | 958 | 0.276 |
| 13 | 5.3 | 0.26 | 31.6 | 387 | 811 | 0.276 |
| 14 | 6.7 | 0.29 | 29.4 | 383 | 830 | 0.327 |
| | | | | | | |

## Claims

1. A catalyst component for the polymerization of olefins comprising Mg, Ti and Cl obtained by a process comprising the following steps:
(a) reacting a precursor of formula MgCl₂.mEtOH, wherein m ≤ 1.5 having a porosity due to pores with radius up to 1 µm of higher than 0.4 cm³/g with an alcohol of formula R^{I}OH where R^{I} is an alkyl different from ethyl, a cycloalkyl or aryl radical having 3-20 carbon atoms said R^{I}OH being reacted with the said precursor in an amount such that the molar ratio R^{I}OH/Mg ranges from 0.01 to 10; and
(b) reacting the product obtained in (a) with TiCl₄ using Ti/Mg molar ratio ranging from 0.01 to 15.

2. The catalyst component according to claim 1 in which the molar ratio R^{I}OH/Mg in step (a) ranges from 0.05 to 4.

3. The catalyst component according to claim 2 in which the molar ratio R^{I}OH/Mg in step (a) ranges from 0.1 to 2.

4. The catalyst component according to claim 1 in which R^{I} is selected from C3-C12 secondary alkyls.

5. The catalyst component according to claim 4 in which R^{I} is selected from C3-C8 cycloalkyls.

6. The catalyst component according to claim 1 in which the precursor of formula MgCl₂.mEtOH has porosity due to pores with radius up to 1 µm of higher than 0.5 cm³/g.

7. The catalyst component according to claim 6 in which, in the said precursor, m is lower than 1.

8. The catalyst component according to claim 7 in which the precursor is obtained by chemical dealcoholation of adducts of formula MgCl₂.mEtOH in which m ranges from 1.5 to 4.5.

9. The catalyst component according to claim 1 wherein in step (b) the TiCl₄ is used in amounts such as to have a Ti/Mg molar ratio ranging from 0.1 to 10.

10. The catalyst component according to claim 1 wherein step (b) is carried out at a temperature ranging from 50 to 140°C.

11. The catalyst component according to claim 1 **characterized in that** it is subject to a pre-activation treatment with hydrocarbylaluminum having from 1 to 6 carbon atoms in the hydrocarbyl radical.

12. Catalyst for the polymerization of olefins obtained by reacting the catalyst component according to any of the claims 1-11 with an organo-Al compound.

13. Process for the polymerization of olefins CH₂=CHR^{III}, wherein R^{III} is hydrogen or a hydrocarbon radical having 1-12 carbon atoms, carried out in the presence of the catalyst of claim 12.

## Patentansprüche

1. Katalysatorkomponente zur Polymerisation von Olefinen, die Mg, Ti und Cl umfasst und durch ein Verfahren erhalten wird, das die folgenden Schritte umfasst:
(a) zur Reaktion bringen eines Präkursors der Formel MgCl₂.mEtOH, wobei m≤1,5, der aufgrund von Poren mit einem Radius bis zu 1 µm eine Porosität von höher als 0,4 cm³/g aufweist, mit einem Alkohol der Formel R¹OH, wobei R¹ ein von Ethyl unterschiedlicher Alkyl-, ein Cycloalkyl- oder Arylrest mit 3 bis 20 Kohlenstoffatomen ist, wobei das R¹OH mit dem Präkursor in einer Menge dergestalt zur Reaktion gebracht wird, dass das Molverhältnis von R¹OH : Mg im Bereich von 0,01 bis 10 liegt; und
(b) zur Reaktion bringen des in (a) erhaltenen Produkts mit TiCl₄ unter Verwendung des Molverhältnisses von Ti : Mg, das im Bereich von 0,01 bis 15 liegt.

2. Katalysatorkomponente nach Anspruch 1, wobei das Molverhältnis von R¹OH : Mg in Schritt (a) im Bereich von 0,05 bis 4 liegt.

3. Katalysatorkomponente nach Anspruch 2, wobei das Molverhältnis von R¹OH : Mg in Schritt (a) im Bereich von 0,1 bis 2 liegt.

4. Katalysatorkomponente nach Anspruch 1, wobei R¹ aus sekundären C₃- bis C₁₂-Alkylen ausgewählt ist.

5. Katalysatorkomponente nach Anspruch 4, wobei R¹ aus C₃- bis C₈-Cycloalkylen ausgewählt ist.

6. Katalysatorkomponente nach Anspruch 1, wobei der Präkursor der Formel MgCl₂.mEtOH aufgrund von Poren mit einem Radius bis zu 1 µm eine Porosität von höher als 0,5 cm³/g aufweist.

7. Katalysatorkomponente nach Anspruch 6, wobei im zweiten Präkursor m niedriger als 1 ist.

8. Katalysatorkomponente nach Anspruch 7, wobei der Präkursor durch chemische Dealkoholisierung von Addukten der Formel MgCl₂.mEtOH erhalten wird, wobei m im Bereich von 1,5 bis 4,5 liegt.

9. Katalysatorkomponente nach Anspruch 1, wobei in Schritt (b) TiCl₄ in Mengen dergestalt verwendet wird, um ein Molverhältnis von Ti : Mg im Bereich von 0,1 bis 10 zu erlangen.

10. Katalysatorkomponente nach Anspruch 1, wobei Schritt (b) bei einer Temperatur im Bereich von 50 bis 140 °C durchgeführt wird.

11. Katalysatorkomponente nach Anspruch 1, **dadurch gekennzeichnet, dass** sie einer Präaktivierungsbehandlung mit Hydrocarbylaluminium mit von 1 bis 6 Kohlenstoffatom(en) im Hydrocarbylrest unterzogen wird.

12. Katalysator zur Polymerisierung von Olefinen, der durch zur Reaktion bringen der Katalysatorkomponente nach einem der Ansprüche 1 bis 11 mit einer Organo-Al-Verbindung erhalten wird.

13. Verfahren zur Polymerisierung von Olefinen, CH₂=CHR^{III}, wobei R^{III} Wasserstoff oder ein Kohlenwasserstoffrest mit 1 bis 12 Kohlenstoffatom(en) ist, das bei Vorliegen des Katalysators nach Anspruch 13 durchgeführt wird.

## Revendications

1. Composant catalytique pour la polymérisation d'oléfines comprenant Mg, Ti et Cl obtenu par un procédé comprenant les étapes suivantes :
(a)réaction d'un précurseur de formule MgCl₂.mEtOH, dans laquelle m ≤ 1,5, présentant une porosité, dues à des pores présentant un rayon de jusqu'à 1 µm, supérieure à 0,4 cm³/g avec un alcool de formule R^{I}OH, R^{I} représentant un alkyle différent d'éthyle, un radical cycloalkyle ou aryle comprenant 3-20 atomes de carbone, ledit R^{I}OH réagissant avec ledit précurseur en une quantité telle que le rapport molaire R^{I}OH/Mg se situe dans la plage de 0,01 à 10 ; et
(b) réaction du produit obtenu en (a) avec du TiCl₄ en utilisant un rapport molaire Ti/Mg dans la plage de 0,01 à 15.

2. Composant catalytique selon la revendication 1, le rapport molaire R^{I}OH/Mg dans l'étape (a) se situant dans la plage de 0,05 à 4.

3. Composant catalytique selon la revendication 2, le rapport molaire R^{I}OH/Mg dans l'étape (a) se situant dans la plage de 0,1 à 2.

4. Composant catalytique selon la revendication 1, R^{I} étant choisi parmi les alkyles secondaires en C3-C12.

5. Composant catalytique selon la revendication 4, R^{I} étant choisi parmi les cycloalkyles en C3-C8.

6. Composant catalytique selon la revendication 1, le précurseur de formule MgCl₂.mEtOH présentant une porosité due à des pores présentant un rayon de jusqu'à 1 µm, supérieure à 0,5 cm³/g_{.}

7. Composant catalytique selon la revendication 6, m étant inférieur à 1 dans ledit précurseur.

8. Composant catalytique selon la revendication 7, le précurseur étant obtenu par désalcoolisation chimique de produits d'addition de formule MgCl₂.mEtOH, m se situant dans la plage de 1,5 à 4,5.

9. Composant catalytique selon la revendication 1, le TiCl₄ étant utilisé dans l'étape (b) en des quantités telles qu'on obtient un rapport molaire Ti/Mg dans la plage de 0,1 à 10.

10. Composant catalytique selon la revendication 1, l'étape (b) étant réalisée dans une plage de température de 50 à 140°C.

11. Composant catalytique selon la revendication 1, **caractérisé en ce qu'**il est soumis à un traitement de préactivation à l'aide d'un hydrocarbylaluminium comprenant 1 à 6 atomes de carbone dans le radical hydrocarbyle.

12. Catalyseur pour la polymérisation d'oléfines obtenu par réaction du composant catalytique selon l'une quelconque des revendications 1-11 avec un composé organique d'Al.

13. Procédé pour la polymérisation d'oléfines de formule CH₂=CHR^{III}, R^{III} représentant hydrogène ou un radical hydrocarboné comprenant 1-12 atomes de carbone, réalisé en présence du catalyseur selon la revendication 12.
